# EUROPEAN PATENT SPECIFICATION

(11) **EP 3 174 168 B1**
(45) Date of publication and mention of the grant of the patent: **21.10.2020**
(21) Application number: 14881486.6
(22) Date of filing: 15.09.2014
(51) Int. Cl.: H01R 31/06

(54) **SFP MODULE**
SFP-MODUL
MODULE SFP

(30) Priority: 23.07.2014 CN 201420410661 U
(43) Date of publication of application: 31.05.2017
(73) Proprietor: ZTE Corporation, Shenzhen, Guangdong 518057 (CN)
(72) Inventor: ZHANG, Haijun, Shenzhen Guangdong 518057 (CN); DONG, Weijie, Shenzhen Guangdong 518057 (CN)
(74) Representative: Mozzi, Matteo
(86) International application number: PCT/CN2014/086548
(87) International publication number: WO 2015/117314

(56) References cited:
- CN-U- 201 515 385
- CN-U- 203 643 598
- US-A1- 2006 209 886
- US-A1- 2009 060 530
- US-A1- 2009 103 926
- US-A1- 2011 200 051
- US-A1- 2012 275 784

## Description

### Technical Field

The disclosure relates to the field of communications, and in particular to a small form factor pluggable (SFP) component.

### Background

In the field of communication access, a small form factor pluggable (SFP) device/component (component) is widely applied in Ethernet optical communications or passive optical network communications, but sometimes a communication medium does not have fiber optics, for example, copper wire mediums such as twisted pair and 5-type line, currently there is only a SFP component of a 5-type line interface (commonly RJ45) existed, and no SFP component of a twisted pair interface, thus the SFP component of the twisted pair interface is demanded in market. In essence, the SFP component of 5-type line interface is a common Ethernet interface. An Ethernet physical layer (PHY) and related isolating transformer are added between the RJ45 and an SFP interface in the SFP component, not referring to a control and management of signal. As for the SFP component of the twisted pair interface, no solution is realized currently.

As for a problem that there is no SFP component of the twisted pair interface in the related art, effective solution is not realized currently.

Document US 2009/103926 A1 discloses systems and methods for integrated framing functionality; optical layer operations, administration, maintenance, and provisioning (OAM&P); forward error correction (FEC); data encapsulation; and performance enhancement support in SFP optical transceiver modules.

Document US 2006/0209886 A1 describes a small form-factor device implementing protocol conversion in digital communication networks.

### Summary

The embodiments of disclosure disclose a small form factor pluggable (SFP) component, so as at least to solve a problem that there is no SFP component of a twisted pair interface existed in the related art.

Any reference to "embodiment(s)" or "aspect(s) of the invention" in this description not falling under the scope of the claims should be interpreted as illustrative example(s) for understanding the invention. Based on an embodiment of the disclosure, the disclosure discloses a small form factor pluggable (SFP) component, including: at least one twisted pair interface, arranged to connected with a twisted pair signal line; a twisted pair access component, connected with the at least one twisted pair interface, and arranged to convert between bearing data in the twisted pair signal line and bearing data in the Ethernet; and a SFP or SFP+ interface, connected with the twisted pair access component, and arranged to be connected with a SFP slot or socket.

In an example embodiment, the twisted pair access component includes: an analog front end (AFE), connected with the at least one twisted pair interface, and arranged to sample bearing data in the twisted pair signal line from an analog signal into a digital signal; a digital signal processor (DSP), connected with the AFE, and arranged to extract effective load from the digital signal; a twisted pair access processor (CPU), connected with the DSP, and arranged to encapsulate the effective load into Ethernet data through a twisted pair access technology.

In an example embodiment, the twisted pair access technology includes one of the follows: asymmetrical digital subscriber line (ADSL), very-high-bit-rate digital subscriber line (VDSL), fast access to subscriber terminals (Gfast), home networking (Ghn), and home phoneline networking protocol (HPNA).

In an example embodiment, the twisted pair access component further includes: a 1588 time synchronization component, connected with the DSP and the twisted pair access CPU, and arranged to extract time information; the twisted pair access CPU is further arranged to encapsulate, according to time information, the effective load based on 1588 precision timing protocol (PTP).

In an example embodiment, an interface of the twisted pair signal line is an interface including a two-core signal pin.

In an example embodiment, the interface of the twisted pair signal line is RJ11 or RJ12.

In an example embodiment, the SFP or SFP+ interface is a serializer/deserializer (Serdes) interface.

In an example embodiment, the SFP component further includes: a Serdes transformation physical layer (PHY), connected with the Serdes interface and the twisted pair access component, and arranged to convert between bearing data of an Ethernet output by the twisted pair access component and Serdes form data.

In an example embodiment, the SFP or SFP+ interface includes a power line pin and a power-off alarm digital pin.

In an example embodiment, the SFP or SFP+ interface includes a Serdes differential signal transmit data (TD)/TD- and a receive data (RD)+/RD-.

In an example embodiment, the SFP or SFP+ interface includes a plus per second (1PPS) or a time of day (ToD) pin.

The SFP component of the disclosure, including: at least one twisted pair interface, which is set to be connected with a twisted pair signal line; a twisted pair access component, connected with the at least one twisted pair interface, and arranged to convert between bearing data in the twisted pair signal line and bearing data in the Ethernet; and a SFP or SFP+ interface, connected with the twisted pair access component, and arranged to be connected with a SFP slot or socket. The problem that there is no SFP component of a twisted pair interface in the related art is solved, the application field of the SFP component is extended, and it is convenient to users.

### Brief Description of the Drawings

The drawings here are used for the further description of the disclosure, being part of the disclosure, the embodiment and description of the disclosure is used for describing the disclosure and not for limiting the scope of protection of the disclosure. In drawings:
Fig. 1 shows a structural block diagram of the SFP component according to an embodiment of the disclosure;
Fig. 2 shows an application notes schematic diagram of a common SFP component according to an example embodiment of the disclosure;
Fig. 3 shows an application notes schematic diagram of a common SFP component, with modified twisted pair interface, according to an example embodiment of the disclosure;
Fig. 4 shows a schematic diagram of a SFP component of a customer premise equipment (CPE) type twisted pair interface applied in a CPE or a base station working as an Ethernet access according to an example embodiment of the disclosure;
Fig. 5 shows a schematic diagram of a SFP component of a center office (CO) type twisted pair interface applied in a downlink product of an Ethernet working as a DSL local side according to an example embodiment of the disclosure;
Fig. 6 shows a schematic diagram, in Ethernet interconnection scene based on copper wire medium, a local side and a terminal respectively use a SFP component of a twisted pair interface to convert between a copper wire technology and an Ethernet technology according to an example embodiment of the disclosure;
Fig. 7 shows a flowchart of a SFP component of a CPE-type twisted pair interface according to an example embodiment of the disclosure.

### Detailed Description of the Embodiments

The disclosure is described below with reference to the drawings and the embodiment. It needs to be noted that the embodiment and characteristics in the embodiment can be combined mutually in condition of no conflict.

The embodiments of the disclosure disclose a small form factor pluggable (SFP) component, which is applied in a twisted pair interface, the SFP component of the twisted pair interface is not a simple analog-digital signal conversion, can be conversion of one of broadband technology, asymmetrical digital subscriber line (ADSL), very-high-bit-rate digital subscriber line (VDSL), fast access to subscriber terminals (Gfast), home networking (Ghn), and home phoneline networking protocol (HPNA), with the Ethernet, the SFP component includes an analog-digital/ digital-analog conversion of a twisted pair interface, signal sample, coding/decoding and the Ethernet data encapsulating, further includes a control management of a twisted pair technology physical layer and a media access control (MAC). The embodiments recover the application of the twisted pair in SFP interface, which is convenient and extensive.

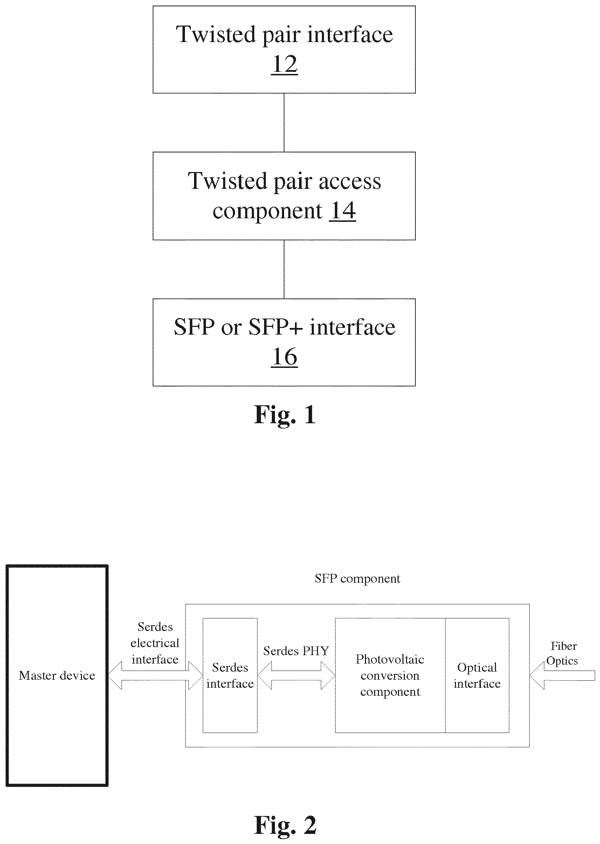

The disclosure discloses a SFP component, Fig.1 shows a structural block diagram of the SFP component according to an embodiment of the disclosure, as shown in Fig.1, the SFP component includes:
at least one twisted pair interface 12, which is arranged to be connected with a twisted pair signal line; a twisted pair access component 14, connected with the at least one twisted pair interface 12, and arranged to convert between bearing data in the twisted pair signal line and bearing data in the Ethernet; and a SFP or SFP+ interface 16, connected with the twisted pair access component 14, and arranged to be connected with a SFP slot or socket.

The disclosure, based on the SFP component, converts between the access data of the twisted pair interface and access data of the SFP or SFP+ interface through the twisted pair access component, so as to realize the SFP component including a twisted pair interface, solve the problem that there is no SFP component of a twisted pair interface in the related art, extend the application field of the SFP component; and it is convenient to users.

In an example embodiment, the twisted pair access component 14 may include: an analog front end (AFE), connected with the at least one twisted pair interface, and arranged to sample bearing data in the twisted pair signal line from an analog signal into a digital signal; a digital signal processor (DSP), connected with the AFE, and arranged to decode the digital signal; a twisted pair access processor (CPU), connected with the DSP, and arranged to encapsulate decoded effective load into Ethernet data through a twisted pair access technology. Certainly, the Ethernet data packet effective load of data, sent by the SFP interface, is transmitted to the DSP to code, then converted into the analog signal through the AFE, and finally sent through the twisted pair interface.

In an example embodiment, the twisted pair access technology may include but not limited to one of the follows: ADSL, VDSL, Gfast, Ghn, HPNA.

In an example embodiment, the twisted pair access component further includes: a 1588 time synchronization component, connected with the DSP and the twisted pair access CPU, and arranged to extract time information; the twisted pair access CPU is further arranged to encapsulate, according to time information, the effective load based on 1588 PTP.

In an example embodiment, the interface of the twisted pair signal line may an interface including a two-core signal pin, for example, interface of RJ11 or RJ12, and there is at least one interface.

In an example embodiment, the SFP or SFP+ interface is a serializer/deserializer (Serdes) interface compatible to the SFP interface.

In an example embodiment, considering the problem that a format of a signal output by the twisted pair access component is not always compatible to the SFP, the SFP component further includes: a Serdes transformation physical layer (PHY), connected with the Serdes interface and the twisted pair access component, and arranged to convert between bearing data of the Ethernet output by the twisted pair access component and Serdes form data.

In an example embodiment, the SFP or SFP+ interface can include at least one of the followings: a power line pin and a power-off alarm digital pin; a Serdes differential signal transmit data (TD)/TD- (moreover ± represents signal level) and a receive data (RD)+/RD-(wherein +- represents signal level); a plus per second (1PPS) or a time of day (ToD) pin.

The disclosure is described below with reference to the embodiments, the following embodiments include above embodiments and example embodiments.

The following embodiments disclose a SFP component and a system of a twisted pair interface, including: a SFP or SFP+ electrical interface; at least one twisted pair electrical interface, which is RJ11 or RJ12 or others at least including a two-core data line form, realizing the conversion between bearing data of the twisted pair technology and the Ethernet data, and supporting time synchronization. The example embodiments solve the problem of fast access of the SFP interface when there is no fiber optics and there is only twisted pair medium.

The SFP component of a twisted pair interface of the example embodiments, including: a SFP or SFP+ electrical interface; at least one twisted pair electrical interface, which is RJ11 or RJ12 or other two-core signal line form, realizing the conversion between bearing data of the twisted pair technology and the Ethernet data, and supporting the time synchronization.

In an example embodiment, the SFP component can be plugged into a SFP interface cage of which a mechanical size satisfies the INF-8074i and SFF-8431 standard requests, and work normally.

In an example embodiment, the twisted pair electrical interface includes: the twisted pair interface is RJ11 or RJ12 form, or other electrical interface form including the two-core data line, and there is at least one interface.

In an example embodiment, the SFP interface includes: a power line pin and a power-off alarm digital pin.

In an example embodiment, the SFP interface includes: a Serdes pin TD/TD- (transmit data) and a RD+/RD- (receive data).

In an example embodiment, the SFP interface includes: a 1PPS or ToD clock output pin.

In an example embodiment, the SFP component includes: an AFE component, a DSP component and a processor component.

In an example embodiment, the component realizes the conversion between the bearing data of the twisted pair technology and the bearing data of the Ethernet, the conversion technology includes: the twisted pair access technology is not limit to the ADSL, VDSL, G.fast, G.hn, HPNA etc.

In an example embodiment, the time synchronization interface includes: outputting 1588PTP message.

In the SFP component and system of the twisted pair interface provided by the disclosure, the SFP component realizes copper wire access on a SFP slot/interface, satisfies the twisted pair medium communication access request, and solves the problem that the optical SFP component is not usable when there is no optical cable.

Fig. 2 shows an application notes schematic diagram of a common SFP component according to an example embodiment of the disclosure, which is a master device including a SFP interface, and working normally after be configured with an Ethernet SFP component.

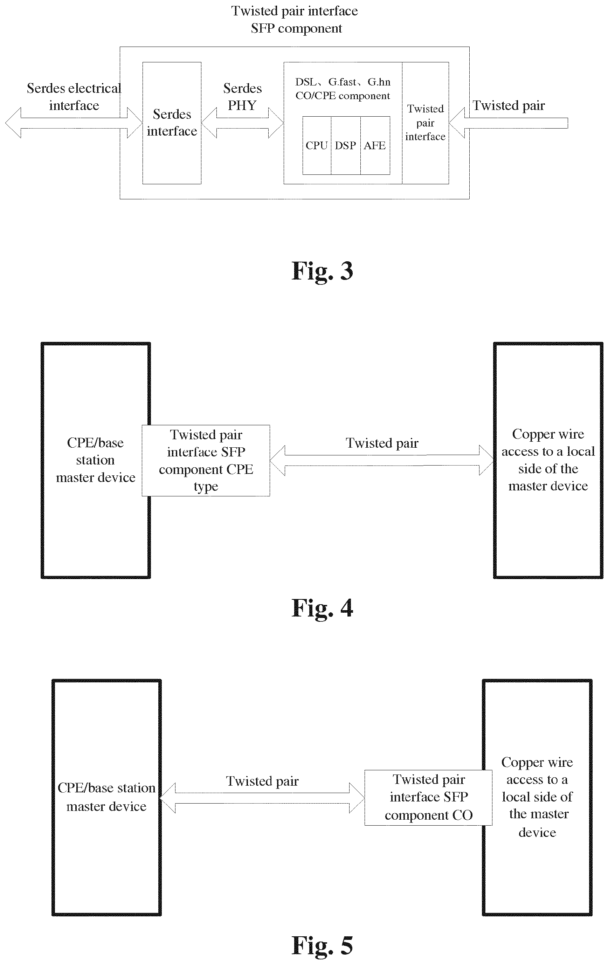

Fig. 3 shows an application notes schematic diagram of a common SFP component, with modified twisted pair interface, according to an example embodiment of the disclosure, wherein the optical medium of the common SFP component shown in the Fig. 2 is replaced with a twisted pair medium, an optical external interface is replaced with an electrical interface, which is RJ11 or RJ12 form, or other interface form including the two-core signal pin; after changing the medium, original electrical conversion component is replaced with other component, replaceable component here is not limit to all kinds of copper wire access technology: such as ADSL, VDSL, G.fast, G.hn, these components include an analog front end, a digital signal processor and a manager, finally output a serdes interface, which is compatible to the SFP interface, and further extract a clock information, and output the 1PPS+ToD pin or output the 1588 PTP message.

Fig. 4 shows an schematic diagram of a SFP component of a customer premise equipment (CPE) type twisted pair interface applied in a CPE or a base station working as an Ethernet access according to an example embodiment of the disclosure.

Fig. 5 shows an schematic diagram of a SFP component of a center office (CO) type twisted pair interface applied in a downlink product of an Ethernet working as a DSL local side according to an example embodiment of the disclosure.

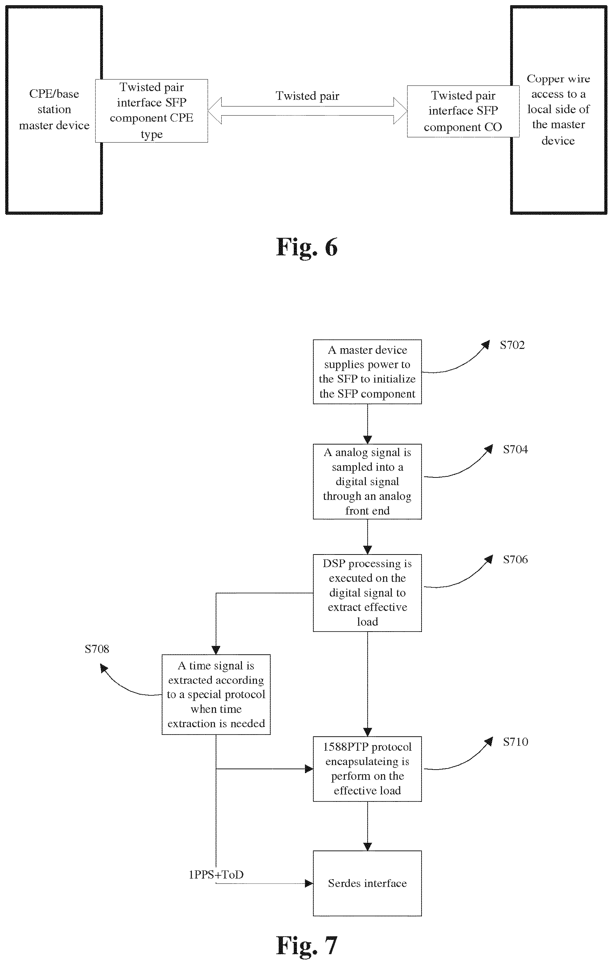

Fig. 6 shows a schematic diagram, in the Ethernet interconnection scene based on copper wire medium, a local side and a terminal respectively use a SFP component of a twisted pair interface to convert between a copper wire technology and an Ethernet technology according to an example embodiment of the disclosure.

The disclosure is described below with reference to the embodiment.

Fig. 7 shows a flowchart of a SFP component of a CPE-type twisted pair according to an example embodiment of the disclosure, the work process of the SFP component of the CPE-type twisted pair shown in Fig. 7 is as the follows:
Step S702, a master device supplies power to the SFP to initialize the SFP component, so as to finish the interactive recognition with an opposite physical layer;
Step S704, data are bare on the twisted pair, a analog signal is sampled into a digital signal through an analog front end, and the digital signal is sent to the DSP component in step S706;
Step S706, DSP processing is executed on the digital signal to extract effective load according to different protocols;
Step S708, a time signal is extracted according to a special protocol when time extraction is needed, so as to output a IPPS+ToD signal and time information is inputted to a 1588 master component;
Step S710, effective load is extracted from the step S706, the Ethernet encapsulating is performed on the effective load, when 1588 time transmission is needed, 1588PTP protocol encapsulating is perform on the effective load according to the time information input in step S708. after this step is finished, an Ethernet data packet is outputted to the serdes interface of the SFP for a use of the master device.

The steps are inverse when the SFP component is used in a local device UNI port.

The conversion between the cooper wire technology (DSL, G.fast, G.hn, HPNA) and the Ethernet is realized through the example embodiments, and fast twisted pair access is realized when no optical cable existed.

Certainly, the skilled person in the art should understand that each component or step of the example embodiments is not limit to a certain copper wire technology, may multiple twisted pair interfaces existed, and used in load sharing or link aggregation.

The above is only the example embodiments of the disclosure and not intended to limit the scope of protection of the disclosure, the skilled person in the art can modify and change, and any modifications, within the principle of the disclosure shall fall within the scope of protection of the disclosure.

### Industrial Applicability

The beneficial effect of the SFP component of the disclosure is as the follows: extending an application field of the SFP component, and be convenient to users.

## Claims

1. A small form factor pluggable, SFP, component, comprising:
at least one twisted pair interface (12), arranged to connected with a twisted pair signal line;
a twisted pair access component (14), connected with the at least one twisted pair interface, and arranged to convert between bearing data in the twisted pair signal line and bearing data in the Ethernet; and
a SFP or SFP+ interface (16), connected with the twisted pair access component, and arranged to be connected with a SFP slot or socket;
wherein the twisted pair access component (14) comprises:
an analog front end, AFE, connected with the at least one twisted pair interface, and arranged to sample bearing data in the twisted pair signal line from an analog signal into a digital signal;
a digital signal processor, DSP, connected with the AFE, and arranged to extract effective load from the digital signal; a twisted pair access processor, CPU, connected with the DSP, and arranged to encapsulate the effective load into Ethernet data through a twisted pair access technology.

2. The SFP component as claimed in claim 1, wherein, the twisted pair access technology comprises one of the follows: asymmetrical digital subscriber line, ADSL, very-high-bit-rate digital subscriber line, VDSL, fast access to subscriber terminals, G.fast, home networking, Ghn, and home phoneline networking protocol, HPNA.

3. The SFP component as claimed in claim 1, wherein, the twisted pair access component (14) further comprises:
a 1588 time synchronization component, connected with the DSP and the twisted pair access CPU, and arranged to extract time information;
the twisted pair access CPU is further arranged to encapsulate, according to time information, the effective load based on 1588 precision timing protocol, PTP.

4. The SFP component as claimed in claim 1, wherein, an interface of the twisted pair signal line is an interface comprising a two-core signal pin.

5. The SFP component as claimed in claim 4, wherein, the interface of the twisted pair signal line is RJ11 or RJ12.

6. The SFP component as claimed in claim 1, wherein, the SFP or SFP+ interface (16) is a serializer/deserializer, Serdes, interface.

7. The SFP component as claimed in claim 6, wherein, the SFP component further comprises:
a Serdes transformation physical layer, PHY, connected with the Serdes interface and the twisted pair access component, and arranged to convert between bearing data of an Ethernet output by the twisted pair access component and Serdes form data.

8. The SFP component as claimed in claim 1, wherein, the SFP or SFP+ interface (16) comprises a power line pin and a power-off alarm digital pin.

9. The SFP component as claimed in claim 1, wherein, the SFP or SFP+ interface comprises a Serdes differential signal transmit data, TD/TD- and a receive data, RD+/RD-.

10. The SFP component as claimed in claim 1, wherein, the SFP or SFP+ interface (16) comprises a plus per second, 1PPS, or a time of day, ToD, pin.

## Patentansprüche

1. Steckbare Komponente mit kleinem Formfaktor (SFP-Komponente), umfassend:
mindestens eine Twisted-Pair-Schnittstelle (12), die so eingerichtet ist, dass sie mit einer Twisted-Pair-Signalleitung verbunden ist;
eine Twisted-Pair-Zugriffskomponente (14), die mit der mindestens einen Twisted-Pair-Schnittstelle verbunden und so eingerichtet ist, dass sie zwischen Lastdaten in der Twisted-Pair-Signalleitung und Lastdaten im Ethernet konvertiert; und
eine SFP- oder SFP+-Schnittstelle (16), die mit der Twisted-Pair-Zugriffskomponente verbunden und so eingerichtet ist, dass sie mit einem SFP-Steckplatz oder -Sockel verbunden ist;
wobei die Twisted-Pair-Zugriffskomponente (14) umfasst:
ein analoges Front-End (AFE), das mit der mindestens einen Twisted-Pair-Schnittstelle verbunden und so eingerichtet ist, dass Lastdaten in der Twisted-Pair-Signalleitung von einem analogen Signal in ein digitales Signal abgetastet werden;
einen digitalen Signalprozessor (DSP) der mit dem AFE verbunden und so eingerichtet ist, dass er dem digitalen Signal eine effektive Last entzieht; ein Twisted-Pair-Zugriffsprozessor (CPU), der mit dem DSP verbunden und so eingerichtet ist, dass die effektive Last über eine Twisted-Pair-Zugriffstechnologie in Ethernetdaten gekapselt wird.

2. SFP-Komponente nach Anspruch 1, wobei die Twisted-Pair-Zugriffstechnologie eines aus Folgendem umfasst: asymmetrische digitale Teilnehmerleitung (ADSL), digitale Teilnehmerleitung mit sehr hoher Bitrate (very-high-bit-rate digital subscriber line, VDSL), schneller Zugriff auf Teilnehmerendgeräte (Gfast), Heimnetzwerktechologie (Ghn) und HPNA-Vernetzungsprotokoll (HPNA = Home Phoneline Networking Alliance).

3. SFP-Komponente nach Anspruch 1, wobei die Twisted-Pair-Zugriffskomponente (14) ferner umfasst:
eine Zeitsynchronisierungskomponente nach 1588, die mit dem DSP und dem Twisted-Pair-Zugriffs-CPU verbunden und so eingerichtet ist, dass sie Zeitinformationen extrahiert;
der Twisted-Pair-Zugriffs-CPU ferner so eingerichtet ist, dass er gemäß Zeitinformationen die effektive Last auf der Grundlage des Präzisionszeitsteuerungsprotokolls (precision timing protocol, PTP) nach 1588 kapselt.

4. SFP-Komponente nach Anspruch 1, wobei eine Schnittstelle der Twisted-Pair-Signalleitung eine Schnittstelle ist, die einen Zwei-Kern-Signalstift umfasst.

5. SFP-Komponente nach Anspruch 4, wobei die Schnittstelle der Twisted-Pair-Signalleitung RJ11 oder RJ12 ist.

6. SFP-Komponente nach Anspruch 1, wobei die SFP- oder SFP+-Schnittstelle (16) eine Serialisierer/Deserialisierer-Schnittstelle (SerDes-Schnittstelle) ist.

7. SFP-Komponente nach Anspruch 6, wobei die SFP-Komponente ferner umfasst:
eine physische SerDes-Transformationsschicht (PHY), die mit der SerDes-Schnittstelle und der Twisted-Pair-Zugriffskomponente verbunden und so eingerichtet ist, dass sie durch die Twisted-Pair-Zugriffskomponente und SerDes-Formulardaten zwischen Lastdaten eines Ethernet-Ausgangs konvertiert.

8. SFP-Komponente nach Anspruch 1, wobei die SFP- oder SFP+-Schnittstelle (16) einen Stromleitungsstift und einen digitalen Stromabschaltalarmstift umfasst.

9. SFP-Komponente nach Anspruch 1, wobei die SFP- oder SFP+-Schnittstelle SerDes-Differenzsignal-Sendedaten (TD/TD-) und -Empfangsdaten (RD+/RD-) umfasst.

10. SFP-Komponente nach Anspruch 1, wobei die SFP- oder SFP+-Schnittstelle (16) einen Plus-pro-Sekunde-Stift (1PPS-Stift) oder einen Tageszeitstift (ToD-Stift) (ToD = time of day) umfasst.

## Revendications

1. Composant enfichable à petit facteur de forme, SFP, comprenant :
au moins une interface à paire torsadée (12), agencée pour être connectée à une ligne de signal à paire torsadée ;
un composant d'accès à paire torsadée (14), connecté à l'au moins une interface à paire torsadée et agencé pour convertir entre des données de prise en charge dans la ligne de signal à paire torsadée et des données de prise en charge dans l'Ethernet ; et
une interface SFP ou SFP+ (16), connectée avec le composant d'accès à paire torsadée et agencée pour être connectée avec une encoche ou une douille SFP ;
dans lequel le composant d'accès à paire torsadée (14) comprend :
une extrémité avant analogique, AFE, connectée à l'au moins une interface à paire torsadée et agencée pour échantillonner des données de prise en charge dans la ligne de signal à paire torsadée d'un signal analogique en un signal numérique ;
un processeur de signal numérique, DSP, connecté à l'AFE et agencé pour extraire la charge effective du signal numérique ; un processeur d'accès à paire torsadée, CPU, connecté au DSP et agencé pour encapsuler la charge effective dans les données Ethernet par le biais d'une technologie d'accès à paire torsadée.

2. Composant SFP selon la revendication 1, dans lequel la technologie d'accès à paire torsadée comprend l'un des éléments suivants : ligne d'abonné numérique asymétrique, ADSL, ligne d'abonné numérique à très haut débit, VDSL, accès rapide aux terminaux d'abonné, Gfast, réseau domestique, Ghn, et protocole de réseau téléphonique domestique, HPNA.

3. Composant SFP selon la revendication 1, dans lequel le composant d'accès à paire torsadée (14) comprend en outre :
un composant de synchronisation temporelle 1588, connecté au DSP et au CPU d'accès à paire torsadée et agencé pour extraire des informations temporelles ;
le CPU d'accès à paire torsadée est en outre agencé pour encapsuler, selon des informations temporelles, la charge effective sur la base du protocole de synchronisation de précision 1588, PTP.

4. Composant SFP selon la revendication 1, dans lequel, une interface de la ligne de signal à paire torsadée est une interface comprenant une broche de signal à deux cœurs.

5. Composant SFP selon la revendication 4, dans lequel, l'interface de la ligne de signal à paire torsadée est RJ11 ou RJ12.

6. Composant SFP selon la revendication 1, dans lequel, l'interface SFP ou SFP+ (16) est une interface sérialiseur/désérialiseur, Serdes.

7. Composant SFP selon la revendication 6, dans lequel, le composant SFP comprend en outre :
une couche physique de transformation Serdes, PHY, connectée à l'interface Serdes et au composant d'accès à paire torsadée et agencée pour convertir entre des données de prise en charge d'un Ethernet délivrées par le composant d'accès à paire torsadée et des données de forme Serdes.

8. Composant SFP selon la revendication 1, dans lequel l'interface SFP ou SFP+(16) comprend une broche de ligne électrique et une broche numérique d'alarme de mise hors tension.

9. Composant SFP selon la revendication 1, dans lequel, l'interface SFP ou SFP+ comprend des données d'émission de signal différentiel Serdes, TD/TD- et des données de réception, RD+/RD-.

10. Composant SFP selon la revendication 1, dans lequel, l'interface SFP ou SFP+ (16) comprend une broche plus par seconde, 1PPS, ou une broche de l'heure du jour, ToD.
